# EUROPEAN PATENT APPLICATION

(11) **EP 1 972 805 A2**
(43) Date of publication of application: **24.09.2008**
(21) Application number: 07011663.7
(22) Date of filing: 14.06.2007
(51) Int. Cl.: F16C 29/04

(54) **Finite linear motion device**

(30) Priority: 19.03.2007 JP 2007071254
(71) Applicant: UNION TOOL CO., Tokyo (JP)
(72) Inventor: Kobayashi, Masaki, c/o Union Tool Co., Shinagawa, Tokyo (JP)
(74) Representative: Hoffmann, Klaus

(57) **Abstract**

A finite linear motion device of uncomplicated configuration and exceptional durability is provided. In the finite linear motion device, a holding device can be prevented from deviating, a compact design is possible, and a cord is not readily worn. There is provided a finite linear motion device comprising a first rail 1 having a first rolling groove 1a, a second rail 2 having a second rolling groove 2a, a plurality of rolling bodies 4 disposed in a rolling path 3 formed from the rolling grooves 1a, 2a, and a holding device 5 for rollably holding the rolling bodies 4. In the finite linear motion device, one end of a cord 6 is connected to a distal end part of the first rail 1; the other end of the cord 6 is wrapped around a first rotating body 7 rotatably provided at a position near a center of the holding device 5, and is connected to a distal end part of the second rail 2; an end of another cord 6 is connected to a proximal end part of the first rail 1; the other end of the cord 6 is wrapped around a second rotating body 8 rotatably provided at a position near the center of the holding device 5, and is connected to a proximal end part of the second rail 2; and two or more of the rotating bodies 4 are provided between the first rotating body 7 and the distal end part of the holding device 5, and between the second rotating body 8 and the proximal end part of the holding device 5.

## Description

### FIELD OF THE INVENTION

The present invention relates to a finite linear motion device.

### BACKGROUND OF THE INVENTION

In a finite linear motion device proposed in the conventional art and comprising a pair of rails provided with rolling grooves, a plurality of rolling bodies disposed in a rolling path formed by the rolling grooves between the rails, and a holding device for holding the rolling bodies at predetermined intervals, the holding device is formed separately from the rails and does not move in conjunction with the rails. Therefore, the movement of the rails and the movement of the holding device are different. When a reciprocating linear movement is repeatedly made, the holding device and stopper screws on both end parts of the rolling path make mutual contact or another such incident occurs, and problems arise in that a highly precise linear motion cannot be made and a predetermined stroke cannot be achieved.

Therefore, a configuration has recently been proposed in which a pinion is mounted on a center part of the holding device and the holding device is prevented from deviating by the use of a so-called rack and pinion system in which a rack is provided to a rail.

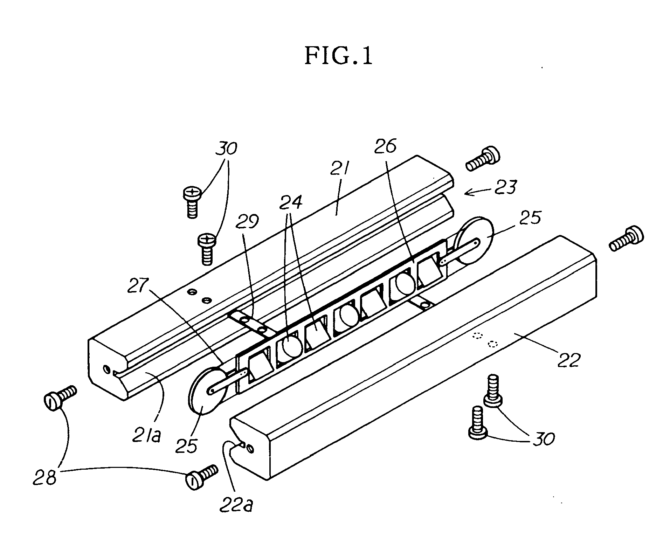

A device proposed as disclosed in Published Unexamined Utility Model Application No. 4-88523 (Patent Document 1) is a finite linear motion device comprising a first rail 21 in which is formed a first rolling groove 21a having a transverse V-shaped cross section, a second rail 22 disposed facing the first rail 21 and provided with a second rolling groove 22a having a transverse V-shaped cross section, a plurality of rolling bodies 24 that are disposed in a rolling path 23 formed by the rolling grooves 21a, 22a of the facing first rail 21 and second rail 22 and that roll over the rolling path 23, and a holding device 26 for rollably holding the rolling bodies 24 at predetermined intervals. In the finite linear motion device, pulleys 25 are provided to end parts of the holding device 26, and a wire 27 connected to an anchoring plate 29 provided to the rails 21, 22 is pulled toward the pulleys 25. As a result, the holding device 26 is suspended and made to move in conjunction with the movement of the rails 21, 22, and the holding device 26 is prevented from deviating (referred to below as "the conventional example of the art"; shown in FIG. 1). In the drawing, the reference symbol 28 indicates a stopper screw for stopping the fall of the holding device 26, and the reference symbol 30 indicates a screw for anchoring the anchoring plate 29 to the rails 21, 22.

However, according to such a rack and pinion system, a problem arises in that contact (friction) between the component parts dramatically hinders smooth travel.

In the conventional example of the art, when the pulley is placed in an interior of the rails, the number of rolling bodies must be reduced. As a result, the ability to bear a load will inevitably decline. When the pulley is provided to an exterior of the rails, the pulleys make strokes along with the holding device. Therefore, a space through which the pulley moves must be maintained, and a problem arises in that the device must be correspondingly increased in size.

Therefore, the present inventors have proposed an invention according to Patent Document 2 that resolves the foregoing problems.

As shown in FIG. 2, the invention according to Patent Document 2 is a finite linear motion device comprising a first rail 31 in which a first rolling groove 31a is formed; a second rail 32 disposed facing the first rail 31 and provided with a second rolling groove 32a; a plurality of rolling bodies 34 that is disposed in a rolling path 33 formed by the rolling grooves 31a, 32a of the facing first rail 31 and second rail 32, and that rolls over the rolling path 33; and a holding device 36 for rollably holding the rolling bodies 34 at predetermined intervals. In the finite linear motion device, an end of a cord 37 of a predetermined length is connected to a distal end part of the first rail 31; the other end of the cord 37 is extended to and slidably wrapped around the rolling body 34 held at a distal end side of the holding device 36 and is connected to a distal end part of the second rail 32; an end of another cord 37 of a predetermined length is connected to a proximal end part of the first rail 31; and the other end of the cord 37 is extended to and slidably wrapped around the rolling body 34 held on a proximal end side of the holding device 36, and is connected to a proximal end part of the second rail 32. In the drawing, reference symbols 31b and 32b indicate screw holes into which are screwed stopper screws 35, and ends of the cord 37 are wrapped around the stopper screws; the reference symbol 36a indicates a plate body, and the reference symbol 36b indicates windows in which the rolling bodies 34 are held.
[Patent Document 1] Published Unexamined Utility Model Application No. 4-88523
[Patent Document 2] Utility Model Registration No. 3109085

However, the present inventors conducted further research and studies, resulting in a conclusion that, in the invention according to Patent Document 2, because the cord 37 is wrapped around the concave groove provided to the rotating bodies 34 that rotate in conjunction with the movement of the holding device 36, deviation occurs between rotational dimensions of a large-sized part that comes into contact with transfer surfaces of the rolling bodies 34 (distance over which the cord 37 moves) and rotational dimensions of a bottom part of the concave groove with which the cord 37 comes into contact (small-sized part). The cord 37 slackens, the ability of the cord to prevent the holding device from deviating declines or friction occurs between the cord and the holding device, the cord 37 is subjected to wear in a relatively short period of time, and the lifespan of the cord 37 may correspondingly decrease.

### SUMMARY OF THE INVENTION

The present invention was devised in view of the foregoing circumstances, and it is an object thereof to provide a finite linear motion device that has an uncomplicated configuration and that has exceptional utility. In this device, a holding device can be prevented from deviating, a compact design can be employed without hindering smooth travel, a cord is not readily worn, and durability is correspondingly improved.

A summary of the present invention shall be given with reference to the accompanying drawings.

The present invention provides a finite linear motion device comprising a first rail 1 provided with a first rolling groove 1a, a second rail 2 disposed facing the first rail 1 and provided with a second rolling groove 2a, a plurality of rolling bodies 4 that is disposed in a rolling path 3 formed by the rolling grooves 1a, 2a of the facing first rail 1 and second rail 2 and that rolls over the rolling path 3, and a holding device 5 for rollably holding the rolling bodies 4 at predetermined intervals; wherein one end of a cord 6 of a predetermined length is connected to a distal end part of the first rail 1; the other end of the cord 6 is extended to and slidably wrapped around a first rotating body 7 that is rotatably provided at a position near a center of the holding device 5 in a length direction, and is connected to a distal end part of the second rail 2; an end of another cord 6 of a predetermined length is connected to a proximal end part of the first rail 1; another end of the other cord 6 is extended to and slidably wrapped around a second rotating body 8 that is rotatably provided at a position near a center of the holding device 5 in the length direction, and is connected to a proximal end part of the second rail 2; and at least two or more of the rotating bodies 4 are provided between the first rotating body 7 and the distal end part of the holding device 5, and between the second rotating body 8 and the proximal end part of the holding device 5.

A finite linear motion device is provided in which, in the finite linear motion device according to the first aspect, the first rotating body 7 and second rotating body 8 are disposed alongside each other in the length direction of the holding device 5.

A finite linear motion device is provided in which, in the finite linear motion device according to the second aspect, the first rotating body 7 and second rotating body 8 are provided to a substantially center part of the holding device 5.

A finite linear motion device is provided in which, in the finite linear device according to any of the first through third aspects, the first rotating body 7 and second rotating body 8 are provided in a substantially bilateral symmetric relationship on either side of a center point of the holding device 5 in the length direction.

A finite linear motion device is provided in which, in the finite linear device according to any of the first through fourth aspects, the first rolling groove 1a and second rolling groove 2a are formed so as to be v-shaped in cross-section.

A finite linear motion device is provided in which, in the finite linear device according to the fifth aspect, clearance concavities 1c, 2c for providing clearance relative to a grinding body that grinds the first rolling groove 1a or second rolling groove 2a is provided to bottom parts of the first rolling groove 1a and second rolling grove 2a; and outer peripheral parts of the first rotating body 7 and the second rotating body 8, and cords 6 are disposed in the clearance concavities 1c, 2c.

When configured in the above-described manner, the present invention provides a finite linear motion device that has an uncomplicated configuration and has extremely exceptional utility. In this device, a holding device can be prevented from deviating, a compact design can be employed without hindering smooth travel, a cord is not readily worn, and durability is correspondingly improved.

### BRIEF DESCRIPTION OF THE DRAWINGS

FIG. 1 is a perspective view schematically showing a conventional example of the art in an exploded state;

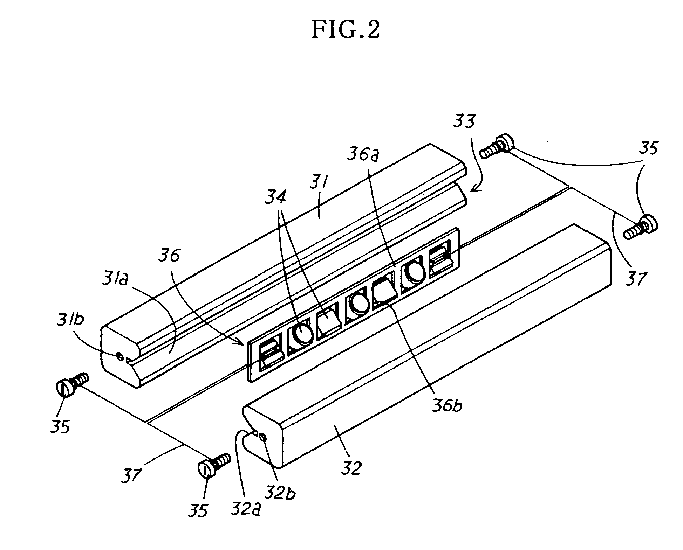

FIG. 2 is a perspective view schematically showing a conventional example of the art in an exploded state;
FIG. 3 is a perspective view schematically showing the present example in an exploded state; and
FIG. 4 is a cross-sectional view schematically showing components of the present example in an enlarged state.

### DETAILED DESCRIPTION OF THE INVENTION

Preferred embodiments of the present invention shall be described in simple terms by illustrating operations of the present invention with reference to the drawings.

When a first rail 1 is moved relative to a second rail 2, a holding device 5 is forcibly moved by a first rotating body 7 held by the holding device 5 and a cord 6 of a predetermined length that is wrapped around a second rotating body 8. The amount that the holding device is moved is restricted to 1/2 the amount that the first rail 1 and second rail 2 move. Therefore, deviation between the first and second rails 1, 2 and the holding device 5 is prevented.

The cord 6 is wrapped around the first rotating body 7 and second rotating body 8 that rotate independently of the rolling bodies 4 (independent of the movement of the rails 1, 2). Therefore, the problems that arise in Patent Document 2 do not occur (the cord 37 of Patent Document 2 is wrapped around the rolling bodies 34, which rotate in conjunction with the movement of the rails 31, 32). Therefore, friction does not readily arise between the first and second rotating bodies 7, 8 and the cord 6, and wearing of the cord 6 is correspondingly minimized.

The first rotating body 7 and the second rotating body 8 are provided to positions near a center of the holding device 5. At least two or more rolling bodies 4 can be provided to the holding device in each of the area between the first rotating body 7 and the distal end part of the holding device 5 and the area between the second rotating body 8 and the proximal end part of the holding device 5. A moment load can thereby be borne by the rolling bodies 4 positioned at both ends of the holding device 5 even when the first rail 1 and second rail 2 are moved in a mutually relative fashion and the rails 1, 2 are both placed in a substantially cantilevered state. Therefore, in instances where the rails 1, 2 are displaced by only a small amount under load, pitching (wobbling in a longitudinal direction relative to the travel direction), yawing (wobbling in a lateral direction relative to the travel direction), and rolling (wobbling in a rotation direction relative to the travel direction) decrease during travel.

For example, in instances such as in the invention disclosed in Patent Document 1, where the rotating body (pulley) is provided to both ends of the holding device rather than to a center of the holding device and the pulley is pulled toward an interior of the rails, the pulley cannot bear a load as the rolling bodies can. Therefore, the amount of displacement under load is greater than in the present invention (the amount of displacement under load at a position near the end parts of the holding device decreases to the extent that the load can be borne by the rolling bodies). In the present invention, the first rotating body 7 and the second rotating body 8 are provided to positions near the center of the holding device 5. Therefore, rolling bodies for bearing a load can be provided to end parts of the holding device, displacement under load is low, the moment load can favorably be borne, deviation is minimized in the holding device, and the first rail and second rail can favorably be moved in mutually relative fashion.

Therefore, the present invention is a finite linear motion device in which the holding device can be properly moved without a rack and pinion being provided, smooth travel can be achieved, and a compact design can be employed. Furthermore, the cord is not readily worn and exceptional durability is correspondingly obtained.

### Examples

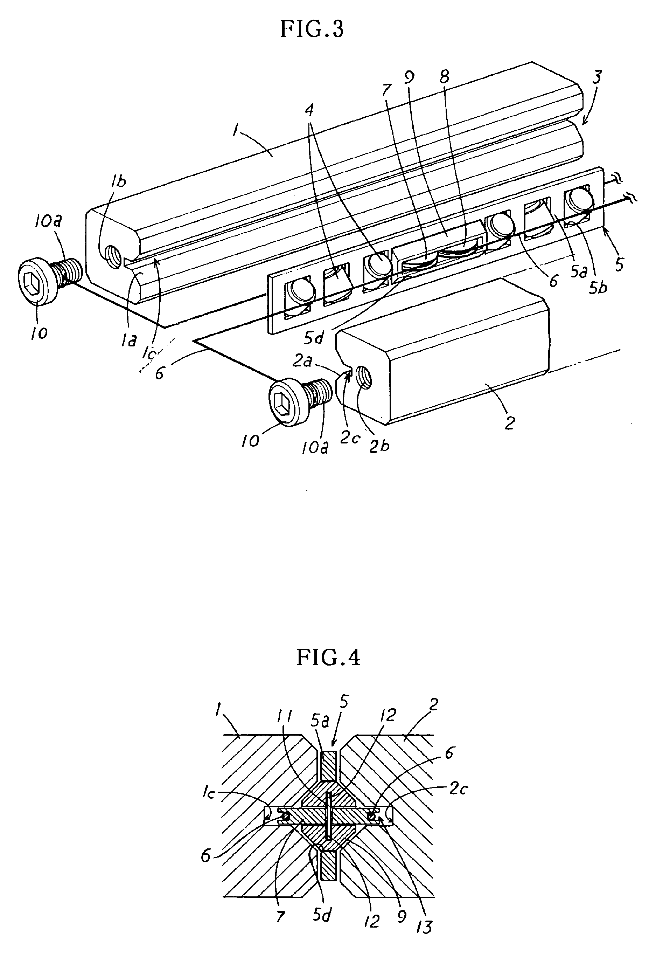

Specific examples of the present invention shall be described with reference to FIGS. 3 and 4.

The present example is a finite linear motion device comprising a first rail 1 in which a first rolling groove 1a is formed, a second rail 2 disposed facing the first rail 1 and provided with a second rolling groove 2a, a plurality of rolling bodies 4 that is disposed in a rolling path 3 formed by the rolling grooves 1a, 2a of the facing first rail 1 and second rail 2 and that rolls over the rolling path 3, and a holding device 5 for rollably holding the rolling bodies 4 at predetermined intervals; wherein one end of a cord 6 of a predetermined length is connected to a distal end part of the first rail 1; the other end of the cord 6 is extended to and slidably wrapped around a first rotating body 7 that is rotatably provided at a position near a center of the holding device 5 in a length direction, and is connected to a distal end part of the second rail 2; an end of a cord 6 of a predetermined length is connected to a proximal end part of the first rail 1; the other end of the cord 6 is extended to and slidably wrapped around a second rotating body 8 that is rotatably provided at a position near a center of the holding device 5 in the length direction, and is connected to a proximal end part of the second rail 2; and at least two or more of the rotating bodies 4 are provided between the first rotating body 7 and the distal end part of the holding device 5, and between the second rotating body 8 and the proximal end part of the holding device 5.

The parts shall be described specifically.

The first rail 1 and second rail 2 are metallic bodies that are substantially square-shaped in cross section. The rolling grooves 1a, 2a that are transversely V-shaped in cross section extend in a longitudinal direction on facing inner surfaces of the first rail 1 and second rail 2. The facing rolling grooves 1a, 2a form the rolling path 3 that is rhombus-shaped in cross section and in which the rolling bodies 4 are disposed.

Clearance concavities 1c, 2c for providing clearance relative to a grinding body (grindstone) when the grinding body is used to grind (finish) wall surfaces of the rolling grooves 1a, 2a (downward-facing surfaces and upward-facing surfaces in FIG. 3) are formed on bottom parts of the cross-sectionally transverse V-shaped rolling grooves 1a, 2a.

A plurality of the rolling bodies 4 is disposed in linear fashion in the rolling path 3 in a state of being held by the holding device 5.

Specifically, cylindrical objects are used for the rolling bodies 4. The rolling bodies 4 are held by the holding device 5 in a state in which adjacent rolling bodies 4 and axial centers thereof are tilted 90 degrees from one another.

The holding device 5 is configured so that a plurality of windows 5b for holding the rolling bodies 4 is formed on a plate body 5a. The rolling bodies 4 make contact with inner edges of the windows 5b and are held.

The first rotating body 7 and the second rotating body 8 are provided to the center part of the holding device 5 in linear fashion so as to be on either side of a center point of the holding device 5 in the length direction. The first rotating body 7, second rotating body 8, and rolling bodies 4 are provided in a substantially bilaterally symmetrical fashion on either side of the center point of the holding device 5 in the length direction. In the present example, the holding device 5 is configured so that three of the rolling bodies 4 are provided each to the area between the first rotating body 7 and the distal end part of the holding device 5, and to the area between the second rotating body 8 and the proximal end part of the holding device 5.

In the present example, a configuration has been adopted in which the rotating bodies 7, 8 are provided in linear fashion to the center part of the holding device 5. However, for example, the holding device 5 may be configured so that the positions of the first and second rotating bodies 7, 8 and the positions of the rolling bodies 4 on the innermost sides in FIG. 3 are switched so that the rolling bodies 4 are disposed between the rotating bodies 7, 8. A configuration may alternatively be employed in which a rolling body is added between the rotating bodies 7, 8 so that the rolling body 4 is disposed between the rotating bodies 7, 8.

Specifically, resin pulleys are used for the rotating bodies 7, 8. These pulleys are rotatably provided via an axle 11 inserted into a shaft hole 12 that is provided to a laterally dividable resin holder 9. The holder 9 is anchored to the windows 5d of the holding device 5.

A groove 13 in which the cord 6 (metallic wire) is disposed is formed on outer peripheral parts of the rotating bodies 7, 8. The radius and width of the rotating bodies 7, 8 are set so that the rotating bodies will be accommodated in the clearance concavities 1c, 2c as shown in FIG. 4 so that the cord 6 and the outer peripheral parts in which the groove 13 is formed will not interfere with the rolling bodies 4.

In the present example, a configuration is adopted wherein one cord is extended to each of the rotating bodies 7, 8 and slidably wrapped around the rotating bodies 7, 8. In other words, the cords 6 are wrapped around the first rotating body 7 and second rotating body 8 in a tightened state.

In an alternative configuration, two cords 6 are attached to the rotating bodies 7, 8, and the cords 6 can be wound and unwound in accordance with the movement of the rolling bodies 4, instead of one cord 6 being wrapped around the rotating bodies. Such a configuration will result in the same action and effect as the above-described present example.

In the present example, the length of the cords 6 is set so that, e.g., the cord 6 on a front side (movement direction side) of the holding device 5 is tightened when the holding device 5 moves less than 1/2 the amount that the first rail 1 moves, and the rolling bodies 4 are pulled forward by the tightening action, whereby the holding device 5 is forcibly pulled forward. On the other hand, the cord 6 on the rear side of the holding device 5 (the side opposite the moving direction) is tightened when the holding device 5 moves more than 1/2 the amount that the first rail 1 moves, and the rolling bodies 4 are pulled rearward by the tightening action, whereby the holding device 5 is forcibly pulled rearward.

In other words, the cords 6 should be suitably set to a length at which partial slackness (excessive length) is avoided and at which the movement of the rolling bodies 4 is not hindered (excessively short) so that the above-described action can be produced.

Stopper screws 10 for stopping the holding device 5 from falling are provided to end surfaces of the first rail 1 and second rail 2.

The stopper screws 10 anchor the end parts of the cords 6 to the end parts of the first rail 1 and second rail 2. Specifically, one end of each of the cords 6 is wrapped around the male screw part 10a of the corresponding stopper screws 10, and the male screw parts 10a are screwed into female screw parts 1b, 2b provided to the end surfaces of the first rail 1 and second rail 2. Therefore, a special screw or other implement for anchoring the cords 6 is not necessary, and the configuration is correspondingly made less complex.

Since the present example is configured in the above-described manner, when the first rail 1 is moved relative to the second rail 2, the holding device 5 is forcibly moved by the first rotating body 7 held by the holding device 5 and by the cords 6 of a predetermined length wrapped around the second rotating body 8. Deviation between the first and second rail 1 and second rail 2 and the holding device 5 is prevented because the amount that the holding device moves is restricted to 1/2 the amount that the first rail 1 and second rail 2 move.

The cords 6 are wrapped around the first rotating body 7 and second rotating body 8, which rotate independently of the rolling bodies 4. Therefore, the problems arising in Patent Document 2 do not occur. Consequently, friction does not readily occur between the first and second rotating bodies 7, 8 and the cords 6, and wearing of the cords 6 is correspondingly reduced.

The first rotating body 7 and the second rotating body 8 are provided at positions near the center of the holding device 5 in which two or more of the rolling bodies 4 can be provided between the first and second rotating bodies 7, 8 and both ends of the holding device 5. A moment load can thereby be borne by the rolling bodies 4 positioned at both sides of the holding device 5 even when the first rail 1 and second rail 2 are moved relative to one another and the rails 1, 2 are both placed in a substantially cantilevered state. There is therefore a decrease in the displacement of the rails 1, 2 under load; and pitching, yawing, and rolling decrease during travel.

For example, as disclosed in Patent Document 1, when the rotating bodies (pulleys) are provided to both ends of the holding device rather than to the center of the holding device, and the pulleys are pulled toward the interior of the rails, the pulleys cannot bear a load as the rolling bodies can. Therefore, displacement under load is greater than in the present invention (displacement under load at a position near the end parts of the holding device is reduced to a point where the load can be borne). In the present invention, the rolling bodies for bearing the load are situated further toward the end parts of the holding device and can favorably bear a moment load. Accordingly, displacement under load is low, deviation in the holding device is minimized, and the first rail and second rail can be favorably moved relative to one another.

In addition, a configuration is adopted in which the first rolling groove 1a and second rolling groove 2a are formed to be transversely V-shaped in cross-section, the clearance concavities 1c, 2c for providing clearance relative to the grinding body that grinds the first rolling groove 1a or second rolling groove 2a are provided to the bottom parts of the first and second rolling grooves, and the cords 6 and the outer peripheral parts of the first rotating body 7 and second rotating body 8 are disposed in the clearance concavities 1c, 2c, respectively. Therefore, the first rotating body 7, second rotating body 8, and cords 6 can be readily disposed without any interference with other members by using the clearance concavities 1c, 2c, which are necessary in the formation of the first rolling groove 1a and second rolling groove 2a.

Therefore, the present example is a finite linear motion device in which the holding device can be properly moved without a rack and pinion being provided, smooth travel can be achieved; a compact design can be employed. Furthermore, the cord is not readily worn and exceptional durability is correspondingly obtained.

## Claims

1. A finite linear motion device comprising a first rail provided with a first rolling groove, a second rail disposed facing the first rail and provided with a second rolling groove, a plurality of rolling bodies that is disposed in a rolling path formed by the rolling grooves of the facing first rail and second rail and that rolls over the rolling path, and a holding device for rollably holding the rolling bodies at predetermined intervals; wherein
one end of a cord of a predetermined length is connected to a distal end part of the first rail; the other end of the cord is extended to and slidably wrapped around a first rotating body that is rotatably provided at a position near a center of the holding device in a length direction, and is connected to a distal end part of the second rail;
an end of another cord of a predetermined length is connected to a proximal end part of the first rail; another end of the other cord is extended to and slidably wrapped around a second rotating body that is rotatably provided at a position near a center of the holding device in the length direction, and is connected to a proximal end part of the second rail; and
at least two or more of the rotating bodies are provided between the first rotating body and the distal end part of the holding device, and between the second rotating body and the proximal end part of the holding device.

2. The finite linear motion device according to claim 1, wherein the first rotating body and second rotating body are disposed alongside each other in the length direction of the holding device.

3. The finite linear motion device according to claim 2, wherein the first rotating body and second rotating body are provided to a substantially center part of the holding device.

4. The finite linear motion device according to any of claims 1 through 3, wherein the first rotating body and second rotating body are provided in a substantially bilateral symmetric relationship on either side of a center point of the holding device in the length direction.

5. The finite linear motion device according to any of claims 1 through 4, wherein the first rolling groove and second rolling groove are formed so as to be V-shaped in cross-section.

6. The finite linear motion device according to claim 5, wherein
clearance concavities for offering relief from a grinding body that grinds the first rolling groove or second rolling groove is provided to bottom parts of the first rolling groove and second rolling grove; and
outer peripheral parts of the first rotating body and the second rotating body, and the cords are disposed in the clearance concavities.
